# EUROPEAN PATENT SPECIFICATION

(11) **EP 1 714 750 B1**
(45) Date of publication and mention of the grant of the patent: **04.06.2008**
(21) Application number: 06007907.6
(22) Date of filing: 13.04.2006
(51) Int. Cl.: B25J 15/02

(54) **Robot hand comprising gripping claws**
Roboterhand mit Greifelementen
Main de robot comprenant des éléments de préhension

(30) Priority: 18.04.2005 JP 2005120226
(43) Date of publication of application: 25.10.2006
(73) Proprietor: FANUC LTD, Minamitsuru-gun, Yamanashi 401-0597 (JP)
(72) Inventor: Hariki, Kazuo, Minamitsuru-gun Yamanashi, 401-0511 (JP); Akiyama, Kazuhiko Room 12-506, Minamitsuru-gun Yamanashi 401-0511 (JP); Oda, Masaru Room 12-104, Minamitsuru-gun Yamanashi 401-0511 (JP); Ochiishi, Yoshinori FANUC Dai2virakaramatsu, Minamitsuru-gun Yamanashi 401-0511 (JP)
(74) Representative: Thum, Bernhard

(56) References cited:
- PATENT ABSTRACTS OF JAPAN vol. 002, no. 054 (M-016), 19 April 1978 (1978-04-19) -& JP 53 013767 A (SHIN MEIWA IND CO LTD), 7 February 1978 (1978-02-07)
- PATENT ABSTRACTS OF JAPAN vol. 017, no. 694 (M-1531), 17 December 1993 (1993-12-17) -& JP 05 237786 A (YOSHIMI HOSHINO), 17 September 1993 (1993-09-17)
- PATENT ABSTRACTS OF JAPAN vol. 010, no. 211 (M-501), 24 July 1986 (1986-07-24) -& JP 61 050882 A (MAZDA MOTOR CORP), 13 March 1986 (1986-03-13)

## Description

### BACKGROUND OF THE INVENTION

### 1. Field of the Invention

The present invention relates to a robot hand according to the preamble of claim 1, and to a robot handling system provided with that robot hand.

### 2. Description of the Related Art

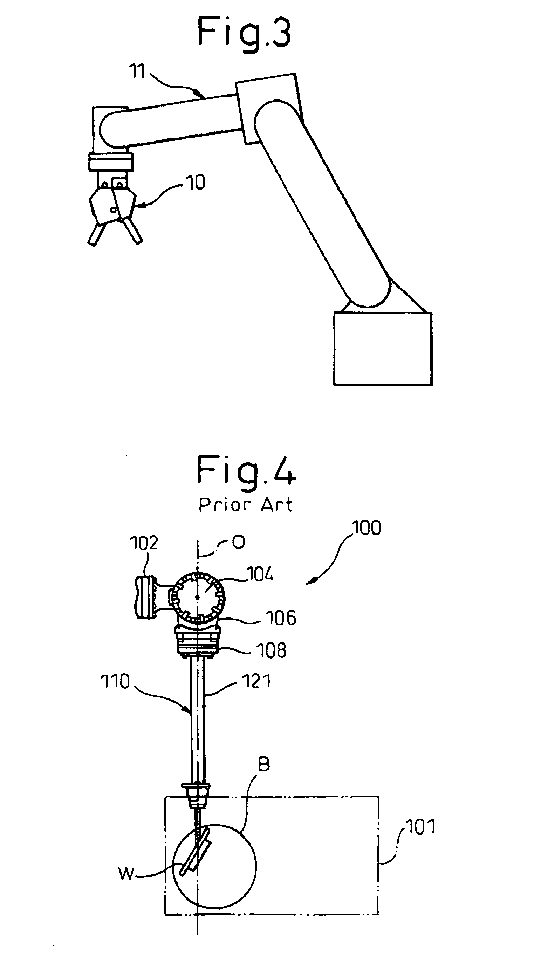

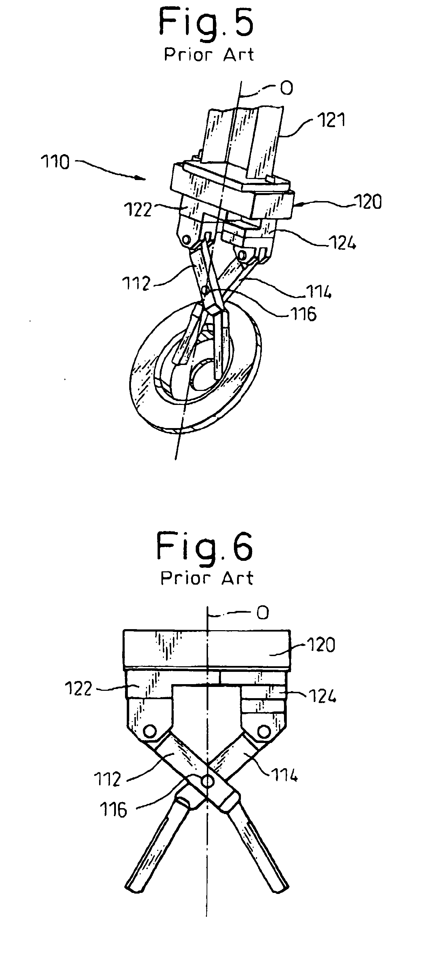

At the present time, in the field of factory automation, multiarticulated industrial robots are used to hold workpieces. For example, in the prior art shown in FIG. 4, a vertical multiarticulated robot 100 for holding a dish-shaped workpiece W stored in a basket 101 opened at its top end is illustrated. The robot 100 is provided with a plurality of arm parts coupled to each other by an articulating part 104 so as to be pivotable within a vertical plane, that is, an upper arm 102 and a forearm 106, and a robot hand 110 according to the preamble of claim 1, attached to the front end of the forearm 106 via a wrist 108. Referring to FIG. 5 which is the enlarged view of the part shown by B in FIG. 4, the robot hand 110 is able to pivot about a center axis O of the robot hand 110 by the wrist 108 (FIG. 4).

Referring to FIGS. 5 and 6, the robot hand 110 according to the prior art is provided with a hand shaft 121, a drive system 120 having moving elements 122, 124 able to approach and move apart from each other in a direction perpendicular to the center axis O and attached to the hand shaft, gripping claws 112, 114 coupled to the moving elements 122, 124 of the drive system 120, and a joint 116 coupled to the centers of the gripping claws 112, 114 so as to be pivotable.

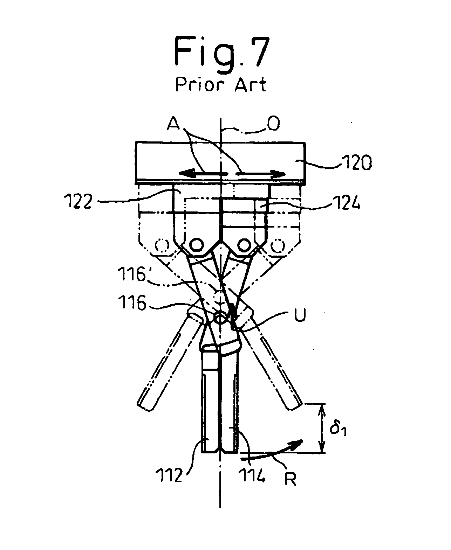

The robot hand attached to the front of a robot arm of an industrial robot has various shapes so as to match with the shapes of different workpieces. For example as shown in FIG. 5, when holding a dish-shaped workpiece W having in cross-section a substantially circular inner circumference W₀, the front ends of the gripping claws 112, 114 are made to move apart from each other to engage with the Inner circumference W₀ of the workpiece W to thereby hold the workpiece W. Therefore, in the robot hand 110 according to the prior art, the moving elements 122, 124 of the drive system 120, as shown by the arrow A in FIG. 7, are operated to move apart from each other in opposite directions so that the front ends of the gripping claws 112, 114 pivot about the joint 116 as shown by the arrow R. At this time, the joint 116, as shown by the arrow U, moves along the center axis O to a position 116'. During this time, the gripping claws 112, 114, as described above, operate to rotate about the joint 116 as shown by the arrow R, so the front ends of the gripping claws 112,114 move along the center axis O in the same direction as the joint 116. There is therefore the problem that the displacement δ₁ of the front ends of the gripping claws 112, 114 along the center axis O becomes large and the workpiece W cannot be accurately held.

JP 53-013767 discloses a gripper for an industrial robot having a pair of gripping claws, each coupled to a base with a respective joint. There is also provided a driving unit connected to each of the gripping claws.

JP 05-237786 discloses a gripper with first and second grip pieces joined by a support shaft and dosed by a spring. The ends of the grip pieces are formed to have a protruded shape and a recessed shape to fit together.

### SUMMARY OF THE INVENTION

Accordingly, an object of the present invention is to solve the problem in the prior art and provide a robot hand redudng the amount of movement of the front ends of the gripping claws of the robot hand along the center axis of the robot hand when holding a workpiece.

To achieve the above object, according to the present invention, there is provided a robot hand to be attached to a front end of a robot arm, which includes a drive unit having a pair of moving elements provided so as to be linearly movable in a lateral direction with respect to a center axis of the robot hand, a pair of gripping claws each coupled with one of the pair of moving elements of the drive unit, and a joint positioned on the center axis and coupling the pair of gripping claws to each other so as to be pivotable, each of the pair of gripping claws having a base end coupled to one of the moving elements at one end so as to be pivotable and a front end for engaging with a workpiece, the base end of each of the pair of gripping claws being coupled by the joint to the base end of the other gripping claw at the other end thereof, the front ends of the pair of gripping claws being moving by moving the moving elements to make the base ends thereof pivot about the joint, characterized in that the front ends of the pair of gripping claws extend from the base ends thereof so that the front ends thereof move apart from each other when the pair of moving elements are made to approach each other in a lateral direction with respect to the center axis and so that the front ends thereof approach each other when the pair of moving elements are made to move apart from each other in a lateral direction with respect to the center axis, and in that the front ends of the gripping claws are positioned at the same sides as the moving elements driving the gripping claws in relation to the center axis.

Further, the pair of gripping claws are preferably members bent into substantially V-shapes about the joint.

Further, the joint preferably includes a pin member extending perpendicularly with respect to both the center axis and the direction of movement of the moving elements.

Further, the workpiece has in cross-section a substantially circular inner circumference, while the robot hand engages with the inner circumference in the state with the front ends of the gripping claws moved apart from each other to hold the workpiece.

Further, according to the present invention, there is provided a robot handling system which induces a multiarticulated robot arm comprised of a plurality of arm parts coupled to each other by articulating parts so as to be rotatable and the above-described robot hand attached to the front end of the robot arm.

According to the present invention, by operating the moving elements to linearly approach or move apart from each other, the front ends of the gripping claws move apart from or approach each other. Therefore, the movement of the joint along the center axis accompanying movement of the moving elements and the movement of the front ends of the gripping claws along the center axis become opposite in direction and the amount of displacement of the gripping claws becomes smaller.

### BRIEF DESCRIPTION OF THE DRAWINGS

The above and other objects, features and advantages of the present invention will be described in more detail below based on the preferred embodiments of the present invention with reference to the accompanying drawings, wherein:
FIG. 1 is a front view of a robot hand according to a preferred embodiment of the present invention;
FIG. 2 is a view for explaining the operation of the robot hand of FIG. 1;
FIG. 3 is a view of the overall configuration showing a robot arm with a robot hand attached thereto;
FIG. 4 is a view showing a multiarticulated industrial robot holding a workpiece;
FIG. 5 is an enlarged view of a part shown by B in FIG. 4;
FIG. 6 is a front view of a robot hand according to the prior art; and
FIG. 7 is a view for explaining the operation of the robot hand of FIG. 6.

### DETAILED DESCRIPTION

Preferred embodiments of the present invention will be described in detail below while referring to the attached figures.

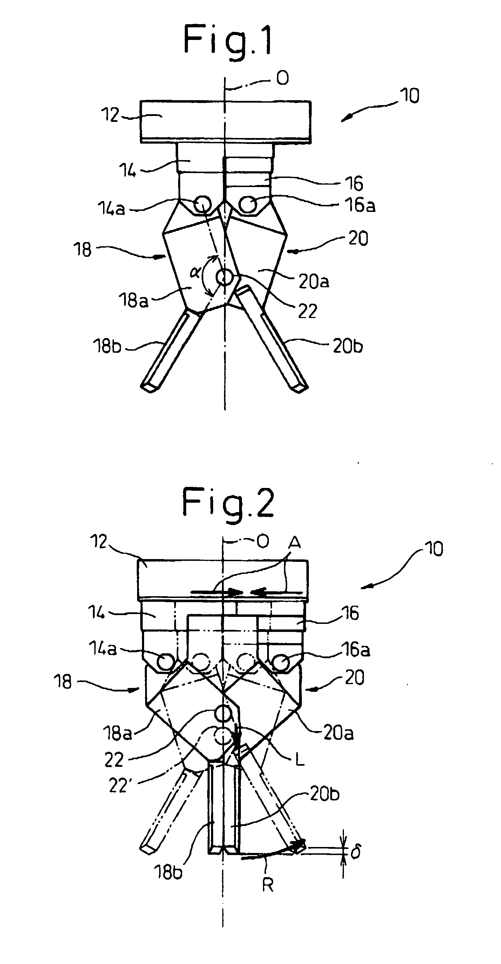

The robot hand 10 according to the present embodiment, as shown in FIG. 3, is designed to be attached to a wrist provided at a front end of a robot arm 11 of for example the multiarticulated industrial robot of the prior art described with reference to FIGS. 4 and 5 or a hand shaft attached thereto so as to form a robot handling system. Referring to FIGS. 1 and 2, the robot hand 10 is provided with a pair of gripping claws 18, 20 coupled to each other so as to be pivotable about a joint 22 and a pneumatic type drive system 12 for driving the pair of gripping claws 18, 20. The drive system 12 is provided with a pair of moving elements 14, 16 approaching and moving apart from each other in a lateral direction in relation to a center axis O of the robot hand 10 and a pneumatic cylinder (not shown) for driving the moving elements 14, 16. The joint 22 is positioned on the center axis O. In the present embodiment, it is comprised of a cylindrical pin member extending perpendicularly with respect to the center axis O and the direction of movement of the moving elements 14, 16.

Each of the gripping claws 18, 20 has a body member 18a or 20a comprised of plate-shaped member forming a base end and a finger member 18b or 20b comprised of a rod-shaped member forming a front end. The body members 18a, 20a are coupled by pin member 14a, 16a extending in parallel with the joint 22 at the base ends thereof to the moving elements 14, 16 so as to be pivotable. Further, the finger members 18b, 20b are attached to the body members 18a, 20a of the gripping claws so that their front ends are positioned at the same sides as the moving elements 14, 16 driving the gripping claws 18, 20 including the finger members 18b, 20b relative to the center axis. That is, the finger members 18b, 20b, as shown in FIG. 1, are attached to the body members 18a, 20a of the gripping claws so as to extend by predetermined angles shown by α in FIG. 1 from the body members 18a, 20a so that the front ends thereof move apart from each other when the moving elements 14, 16 approach each other. Note that the angle α is the angle formed by the line connecting the center of the joint 22 and the center of the pin member 14a or 16a and the line connecting the center of the joint 22 and the front end of the finger member 18b or 20b. Further, FIG. 1 shows the angle α for only one gripping claw 18 among the gripping claws 18, 20, but the view is similar for the other gripping claw 20 as well.

The operation of the present embodiment will be described below.

According to the present embodiment, in the robot hand 10, due to the action of the moving elements 14, 16 moving apart from each other, as shown by the solid line in FIG. 2, the front ends of the gripping claws 18, 20 approach each other. In the robot hand 10 of the present embodiment, like the robot hand 110 of the prior art, as shown in FIG. 5, the front ends of the gripping claws 18, 20 engage with the inner circumference W₀ of the workpiece W to thereby hold the workpiece. Therefore, in the robot hand 10, from the state of FIG. 2, the moving elements 14, 16 are operated to approach each other as shown by the arrow A to make the front ends of the gripping claws 18, 20 move apart from each other as shown by the arrow R.

At this time, the joint 22, as shown by the arrow L, moves along the center axis O to the position shown by 22' toward the front end direction of the robot hand 10. During this time, the gripping claws 18, 20, as described above, operate to turn about the joint 22 as shown by the arrow R, so the front ends of the gripping claws 18, 20 move along the center axis O in a direction opposite to the movement direction of the joint 22. The displacement δ of the front ends of the gripping claws 18, 20 along the center axis O becomes much smaller compared with the displacement δ₁ of the gripping claws 112, 114 of the robot hand 110 of the prior art shown in FIG. 7. Therefore, when using the robot hand 10 to hold the workpiece W, even if the robot arm is not operated to compensate for displacement of the gripping claws 112, 114, the workpiece W can be sufficiently held by the robot hand 10.

Further, since the displacement δ of the front ends of the gripping claws along the center axis O is small, it becomes possible to easily estimate the positions of the gripping claws 18, 20 in the open state from the positions of the front ends of the gripping claws in the closed state. This has the advantage of facilitating teaching of the robot. In addition, since the gripping claws 18, 20 move around the workpiece, even if the workpiece is tilted, the claws will not interfere with it other than at the locations of the front ends of the gripping claws. Therefore, there is no need to change the orientation of the hand in accordance with the change in orientation of the workpiece.

## Claims

1. A robot hand (10) to be attached to a front end of a robot arm (11), comprising:
a drive unit (12) having a pair of moving elements (14, 16) provided so as to be linearly movable in a lateral direction with respect to a center axis (O) of said robot hand (10);
a pair of gripping claws (18, 20) each coupled with one of the pair of moving elements (14, 16) of said drive unit (12); and
a joint (22) positioned on said center axis (O) and coupling said pair of gripping claws (18, 20) to each other so as to be pivotable,
each of said pair of gripping claws (18, 20) having a base end (18a, 20a) coupled to one of said moving elements (14, 16) at one end so as to be pivotable and a front end (18b, 20b) for engaging with a workpiece (W),
the base end of each of said pair of gripping claws (18, 20) being coupled by said joint (22) to the base end of the other gripping claw at the other end thereof,
the front ends (18b, 20b) of said pair of gripping claws (18,20) being moved by moving said moving elements (14, 16) to make said base ends (18a,20a) thereof pivot about said joint (22),
**characterized in that**
the front ends of said pair of gripping claws (18, 20) extend from said base ends thereof so that the front ends thereof move apart from each other when said pair of moving elements (14, 16) are made to approach each other in a lateral direction with respect to said center axis (0) and so that the front ends thereof approach each other when said pair of moving elements (14, 16) are made to move apart from each other in a lateral direction with respect to said center axis (O), and **in that** the front ends of said pair of gripping claws (18, 20) are positioned at the same sides as the moving elements (14, 16) driving said gripping claws in relation to said center axis (O).

2. The robot hand according to claim 1, wherein said pair of gripping claws (18, 20) are members bent into substantially V-shapes about said joint (22).

3. A robot handling system comprising:
a multiarticulated robot arm (11) comprised of a plurality of arm parts coupled to each other by articulating parts so as to be rotatable; and
a robot hand (10) attached to the front end of said robot arm (11) according to any one of claims 1 or 2.

## Patentansprüche

1. Roboterhand (10) zum Anbringen an einem vorderen Ende eines Roboterarms (11), aufweisend:
eine Antriebseinheit (12), die ein paar von bewegbaren Elementen (14, 16) aufweist, die zum linearen Bewegen in einer lateralen Richtung bezüglich einer Mittelachse (O) der Roboterhand (10) vorgesehen sind;
ein Greifklauenpaar (18, 20), von dem jede Greifklaue mit einem der bewegbaren Elemente (14, 16) der Antriebseinheit (12) gekoppelt ist; und
ein Gelenk (22), das auf der Mittelachse (O) positioniert ist und das das Greifklauenpaar (18,20) schwenkbar aneinander koppelt,
wobei jede Greifklaue des Greifklauenpaars (18, 20) ein Basisende (18a, 20a), das schwenkbar an ein Ende der bewegbaren Elemente (14, 16) gekoppelt ist, und ein vorderes Ende (18b, 20b) zum in Eingriff bringen mit einem Werkstück (W) aufweist,
wobei das Basisende von jeder Greifklaue des Greifklauenpaares (18, 20) durch das Gelenk (22) mit dem Basisende der anderen Greifklaue an dem anderen Ende davon gekoppelt ist,
wobei die vorderen Enden (18b, 20b) des Greifklauenpaares (18, 20) durch eine Bewegung der bewegbaren Elemente (14, 16) bewegt werden, die die Basisenden (18a, 20a) um das Gelenk (22) schwenkt,
**dadurch gekennzeichnet, dass**
die vorderen Enden des Greifklauenpaares (18, 20) sich von den Basisenden aus erstrecken, so dass die vorderen Enden sich voneinander weg bewegen, falls die bewegbaren Elemente (14, 16) sich aneinander in einer lateralen Richtung bezüglich der Mittelachse (O) annähern, und so dass deren vorderen Enden sich aneinander annähern, falls die bewegbaren Elemente (14, 16) sich in einer lateralen Richtung bezüglich der Mittelachse (O) auseinander bewegen, und dass die vorderen Enden des Greifklauenpaares (18, 20) an denselben Seiten positioniert sind, wie die bewegbaren Elemente (14, 16), die die Greifklauen in Relation zu der Mittelachse (O) antreiben.

2. Roboterhand nach Anspruch 1, wobei das Greifklauenpaar (18, 20) aus Teilen gebildet ist, die im Wesentlichen V-förmig um das Gelenk (22) gebogen sind.

3. Roboterhandhabungssystem aufweisend:
einen Mehrgelenkroboterarm (11), der eine Mehrzahl von durch Gelenke aneinander gekoppelte, rotierbare Armteile aufweist; und
eine Roboterhand (10) nach einem der Ansprüche 1 oder 2 zum Anbringen an einem vorderen Ende des Roboterarms (11).

## Revendications

1. Main de robot (10) devant être fixée à une extrémité frontale d'un bras de robot (11), comprenant :
une unité d'entraînement (12) possédant une paire d'éléments mobiles (14, 16) prévus de sorte d'être amovibles linéairement dans une direction latérale par rapport à un axe central (O) de ladite main de robot (10) ;
une paire de griffes de préhension (18, 20) chacune couplée à l'un de la paire d'éléments mobiles (14, 16) de ladite unité d'entraînement (12) ; et
une jointure (22) positionnée sur ledit axe central (O) et couplant ladite paire de griffes de préhension (18, 20) l'une à l'autre de sorte d'être pivotables,
chacune de ladite paire de griffes de préhension (18, 20) possédant une extrémité de base (18a, 20a) couplée à l'un desdits éléments mobiles (14, 16) au niveau d'une extrémité de sorte d'être pivotable, et une extrémité frontale (18b, 20b) destinée à venir en prise avec une pièce à usiner (W),
l'extrémité de base de chacune de ladite paire de griffes de préhension (18, 20) étant couplée par ladite jointure (22) à l'extrémité de base de l'autre griffe de préhension au niveau de l'autre extrémité de celle-ci,
les extrémités frontales (18b, 20b) de ladite paire de griffes de préhension (18, 20) étant déplacées en déplaçant lesdits éléments mobiles (14, 16) pour amener lesdites extrémités de base (18a, 20a) de celles-ci à pivoter autour de ladite jointure (22),
**caractérisé en ce que** les extrémités frontales de ladite paire de griffes de préhension (18, 20) s'étendent depuis lesdites extrémités de base de celles-ci de sorte que les extrémités frontales de celles-ci s'éloignent l'une de l'autre quand ladite paire d'éléments mobiles (14, 16) sont amenés à s'approcher l'un de l'autre dans une direction latérale par rapport audit axe central (O) et de sorte que les extrémités frontales de celles-ci s'approchent l'une de l'autre quand ladite paire d'éléments mobiles (14, 16) sont amenés à s'éloigner l'un de l'autre dans une direction latérale par rapport audit axe central (O), et **en ce que** les extrémités frontales de ladite paire de griffes de préhension (18, 20) sont positionnées sur les mêmes côtés que les éléments mobiles (14, 16) entraînant lesdites griffes de préhension par rapport audit axe central (O).

2. Main de robot selon la revendication 1, dans laquelle ladite paire de griffes de préhension (18, 20) sont des éléments courbés en forme sensiblement de V par rapport à ladite jointure (22).

3. Système de manipulation de robot comprenant :
un bras de robot multiarticulé (11) constitué d'une pluralité de parties de bras couplées les unes aux autres par des parties d'articulation de sorte d'être rotatives ; et
une main de robot (10) fixée à l'extrémité frontale dudit bras de robot (11) selon l'une quelconque des revendications 1 ou 2.
